Europäisches Patentamt

European Patent Office

Office européen des brevets

(11) Publication number: **0 107 737**
**B1**

## (12) EUROPEAN PATENT SPECIFICATION

(45) Date of publication of patent specification: **19.09.90**

(51) Int. Cl.⁵: **B 23 H 7/10**

(21) Application number: **83901393.5**

(22) Date of filing: **28.04.83**

(86) International application number:
**PCT/JP83/00134**

(87) International publication number:
**WO 83/03789 10.11.83 Gazette 83/26**

(54) **WIRE ELECTRODE CUTTER FOR WIRE CUT DISCHARGE MACHINING APPARATUS.**

(30) Priority: **28.04.82 JP 62483/82 u**
**13.05.82 JP 70003/82 u**

(43) Date of publication of application:
**09.05.84 Bulletin 84/19**

(45) Publication of the grant of the patent:
**19.09.90 Bulletin 90/38**

(84) Designated Contracting States:
**FR**

(56) References cited:
**JP-A-5 676 338**
**JP-A-56 102 435**

(73) Proprietor: **INOUE-JAPAX RESEARCH INCORPORATED**
**5289 Aza Michimasa Nagatsudacho Midoriku Yokohamashi Kanagawaken 227 (JP)**

(72) Inventor: **INOUE, Kiyoshi 16-8, Kamiyoga 3-chome**
**Setagaya-ku**
**Tokyo 158 (JP)**
Inventor: **Toyoshima Tatsue EDM Shuhenkiki K.K.**
**100, Sakato Takatsuku Kawasakishi Kanagawaken 213 (JP)**

(74) Representative: **Rodhain, Claude et al**
**Cabinet Claude Rodhain 30, rue la Boétie**
**F-75008 Paris (FR)**

Courier Press, Leamington Spa, England.

## Description

Technical field

This invention relates to a wire-electrode cutting apparatus and, more particularly, to a wire-electrode cutting apparatus to cut a wire-cutting electrode to be used for a wire-cut electric discharge machine.

Background art

Recently, in order to improve a work precision of the wire cut spark erosion and other work performances, a wire-electrode to be used for the wire-cut spark erosion has a tendency such that the spark erosion is performed by setting the tensile strength of the wire-electrode to be a higher value upon working using a wire having a high-tensile strength, e.g. a brass (Copper-Zinc alloy) or the like as an electrode wire. Therefore, when one tries to cut in a conventional manner by strongly pulling the wire-electrode by gripping it with the hand or grasping it with the hand with a portion thereof wound around a finger, a large force is required to cut and there is also a danger of cutting the hand and finger or the like by the wire-electrode upon cutting.

As a consequence, it can be considered to use pliers, cutting nipper, cutting pliers, or other various kinds of metal scissors to cut the wire-electrode. However, the cutting by means of such various kinds of tools and the like causes various types of burr, bending portion, damaged portion, etc. at the cutting edge portion by the wire-electrode. In many cases, a diameter of its cutting surface is substantially the same as that of the wire-electrode used, or the cutting surface is pressed flat-like shape having a large maximum diameter. Thus, there is such a problem in the subsequent wire-cut spark erosion that it is difficult to smoothly perform the installing work of the wire-electrode so as to pass through a pair of upper and lower wire-electrode guides, working fluid injecting nozzles, work starting holes of the workpiece, or the like.

Because of such reasons, upon the cutting of a wire-electrode, the cutting portion is pulled and stretched so as to be thin by applying a tensile force to the wire-electrode to cut the wire while causing the work hardening, thereby obtaining the cutting portion which has a better linearity but no burr. However, for a wire-electrode with a high tensile strength that has been frequently used in recent years as described above, even if it is cut by means of a mechanical stretching-cutting apparatus, the electrode wire will have been cut before it is sufficiently pulled and stretched since an elongation percentage is low, although the tensile strength is high, thus cutting edge portion does not become the straight line. In addition, the electrode wire is cut so that the cross section of the cutting portion is about the same shape before cutting, and any burrs and the like are frequently formed on the cutting surface. Hence, it is difficult to pass the wire-electrode through the guides and nozzles of the working machine, the inserting hole of the workpiece or the like.

Therefore, there has been proposed such a technology wherein a wire-electrode is heated applying the tensile force to the wire-electrode in its axial direction, thereby melt-cutting or cutting while pulling and stretching the wire; this technology is disclosed in an official gazette of a Japanese Published Unexamined Patent Application No. 76338 of 1981. However, in this well-known technology, since the control of the temperature and tensile force when cutting the wire-electrode is insufficient, the shape of the cutting edge is instable and there are such problems that the heating apparatus is large and the work is not rapidly done.

A wire-electrode cutting apparatus capable of cutting-off a continuous wire-electrode, is also described in patent GB—A—2 062 527.

In this document, there is disclosed a wire-electrode cutting apparatus for a wire-cut electric discharge machine, comprising means for applying a predetermined tensile force to a portion to be cut of a wire-electrode and current supply means for supplying electricity of a predetermined amount for heating said portion to be cut so that softening, elongating and cutting-off the wire-electrode at the intermediate portion of the current supply means can be carried out.

It is an object of the present invention to provide a wire-electrode cutting apparatus which comprises moreover a control of the temperature and tensile force, by a working interrelationship between a tension mechanism and the current supplying means. So is solved the above-mentioned problem of the background art, wherein the electrode wire may be cut before it is sufficiently pulled and stretched and thus cutting edge portion does not become the straight line.

The present invention was made to eliminate such conventional drawbacks. Accordingly, the present invention provides a wire-electrode cutting apparatus for a wire-cut electric discharge machine, comprising means for applying a predetermined tensile force to a portion to be cut of a wire-electrode and current supply means for supplying electricity of a predetermined amount for heating said portion to be cut so that softening, elongating and cutting of the wire-electrode at the intermediate portion of the current supply means can be carried out, said wire-electrode cutting apparatus further comprising a tension sensing mechanism capable of detecting a tensile force applied to the wire-electrode when the wire-electrode is fixed or braked at the sending section and pulled at the pulling section said mechanism being adapted to send a control signal to the current supplying means for energizing and heating the electrode-wire when the tensile force is raised up to a predetermined value, whereby the electrode being soften, elongated and cut at the intermediate portion of the current supplying means.

The invention further provides a wire-electrode cutting apparatus for a wire-cut electric discharge machine, comprising means for applying a predetermined tensile force to a portion to be cut of a wire-electrode and current supply means for supplying electricity of a predetermined amount for heating said portion to be cut so that softening, elongating and cutting of the wire-electrode at the intermediate portion of the current supply means can be carried out, said apparatus further comprising:

a pair of electrode members;

a pair of holding members which are arranged opposite to said electrode members so that the wire-electrode can be gripped between the electrode members and the holding members, said electrode members and said holding members being provided on a pair of moving members slidably arranged to each other; said means for applying a predetermined tensile force to a portion to be cut of the wire-electrode comprising means for abutting said holding members to said members to grip the wire-electrode therebetween and for moving said holding members away from each other; and said wire-electrode stretched by these members being electrically heated when a limit switch arranged to be operated by the moving member is turned on.

The gist of the present invention is that the wire-electrode cutting apparatus is constituted in such a manner that the cutting is done while pulling and stretching and locally heating the wire-electrode at a constant temperature in the state that a constant tensile force is applied to the cutting portion of the wire-electrode, thereby obtaining the elongated cutting edge without any burrs.

Brief description of the drawings

Fig. 1 is an explanatory diagram showing an embodiment of a wire-electrode cutting apparatus according to the present invention;

Fig. 2 is a partially enlarged explanatory diagram thereof;

Fig. 3 is a cross sectional view showing an embodiment of the wire-electrode cutting apparatus installed in a wire-cut electric discharge machine;

Fig. 4 is a cross sectional enlarged view of the wire-electrode cutting section of the apparatus shown in Fig. 3;

Figs. 5 to 7 are cross sectional views taken along the lines V—V, VI—VI and VII—VII of Fig. 4, respectively; and

Figs. 8 and 9 are explantory diagrams showing another embodiment of the wire-electrode cutting apparatus.

Best mode for carrying out the invention

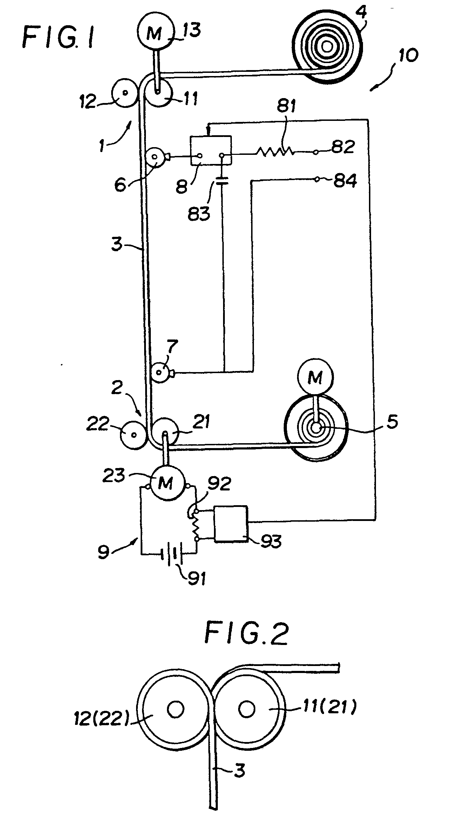

In Fig. 1, a wire-electrode cutting apparatus 10 comprises a wire-electrode sending section 1 and a wire-electrode pulling section 2 which are mounted on bases or the like (not shown) attached respectively to a pair of upper and lower arms (not shown) that are fixedly or elevationally supported to a column of a wire-cut electric discharge machine.

In this embodiments shown in Fig. 1, the sending section 1 and the pulling section 2 are similarly constituted; namely, they comprise capstans 11 and 21, pinch rollers 12 and 22 adapted to pressure a wire-electrode 3 to the capstans 11 and 21, and motors 13 and 23 for driving the capstans 11 and 21.

A reference numeral 4 is a reel for supplying the wire-electrode 3, while 5 collecting reel therefor. The wire-electrode 3 is pulled out from the supplying reel 4 and gets through the pass between the capstan 11 and the pinch roller 12. Then, it gets through the pass between the capstan 21 and the pinch roller 22 at the wire-electrode pulling section 2 and is rolled round collecting reel 5. The wire-electrode 3 may be cut so as to be a proper length and may be thrown into a vessel and the like as short pieces.

Although not shown, the pinch rollers 12 and 22 are constituted in such a manner that they sufficiently and strongly press the wire-electrode 3 to the capstans 11 and 21 by well-known means such as a spring or the like, and these pinch rollers are rotatably supported while being applied the frictional forces by the capstans 11 and 21.

On the other hand, although the motor 13 is not necessarily an essential component for the spark erosion, it is needed for automatic wire-threading after cutting the wire-electrode.

The capstan 21 is coupled to the motor 23 and is constituted so as to rotate in the direction so that the wire-electrode 3 moves from the sending portion 1 to the pulling section 2 and so as not to move the wire-electrode 3 if the motor 23 is inoperative during the spark erosion.

Although the motors 13 and 23 synchronously rotate during the electric discharge work, the peripheral speed of the capstan 21 on the pulling side is larger than that of the capstan 11 on the sending slide because the diameter of the capstan 11 has been present to be slightly smaller than that of the capstan 12; thus, a predetermined tensile force is applied to the wire-electrode 3.

However, during the spark erosion, the motor 13 to drive the capstan 11 may be used as a braking generator, and the capstan 11 may be also used not as a capstan but as a braking roller or a loading roller.

A capacitor 83 is charged to a predetermined voltage through a resistor 81 by a DC power supply (not shown) connected to terminals 82 and 84. Power feeding pulleys 6 and 7 are arranged with a predetermined interval between the sending the sending section 1 and the pulling section 2. These power feeding pulleys 6 and 7 are adapted to detachably about on the wire-electrode 3 and are connected through a switch 8 with the capacitor 83. These pulleys are come into contact with the wire-electrode 3 that will be stretched between the sending section 1 and the pulling section 2 if necessary when the wire-electrode is cut. When the switch 8 is turned on, the electricity accumulated in the capacitor 83 flows from the power feeding pulley 6 through the wire-electrode 3 between the pulleys 6 and 7 to the pulley 7, thereby heating the wire-electrode 3.

Although not shown, well-known wire-electrode positioning guides of the die type or boat form having a V groove or the like are respectively provided between the sending section 1 and the power feeding pulley 6 and between the pulling section 2 and the power feeding pulley 7. The portion between the above-mentioned pair of positioning guides is a workpiece working section.

On the other hand, a tension detecting mechanism 9 for detecting a tensile force to be applied to the wire-electrode 3 is attached to the motor 23 connected to the capstan 21 of the pulling section 2.

The tension detecting mechanism 9 comprises a power supply 91 for supplying a driving power to the motor 23, a resistor 92 interposed between the motor 23 and the power supply 91 for sensing the power supplied, and a signal converter 93. Input terminals of the signal converter 93 are connected across the resistor 92 and its output terminal is connected to the switch 8 to sending a switching control signal.

While performing the spark erosion, the capstans 11 and 21 of the sending section 1 and pulling section 2 are rotated at the same speed or with a slight difference in speed, and the wire-electrode 3 which has been wound around the supplying reel 4 is sent out from the sending section 1 to the pulling section 2. Upon completion of the work, and when the wire-electrode 3 is cut, the power feeding pulleys 6 and 7 are first moved to come into contact with the wire-electrode 3, then the rotation of the motor 13 of the sending section 1 is stopped and only the motor 23 of the pulling section 2 is rotated.

In this state, the wire-electrode 3 is fixed on the side of sending section 1 or forcibly pulled for causing the motor 13 or the like to reversely rotate, so that the tensile force to be applied to the wire-electrode 3 rapidly increases.

As the tensile force applied to the wire-electrode 3 increases, an axial load of the motor 23 to rotate the capstan 21 also increases, so that a current to drive the motor 23 increases and a potential difference between both terminals across the resistor 92 increases.

When this electric potential difference reaches a constant fixed value, a control signal is transmitted from the signal converter 93 to the switching control unit of the switch 8 to close the switch 8, thereby closing the electric discharging circuit consisting of the switch 8, power feeding pulley 6, wire-electrode 3, and power feeding pulley 7. Thus, the charges that have been preliminarily accumulated in the capacitor 83 flow through the wire-electrode 3 to heat and soften this. Consequently, the wire-electrode 3 is elongated and becomes thin, and finally, it is cut at the intermediate portion of the power feeding pulleys 6 and 7.

In this embodiment, althoguh the wire-electrode 3 is constituted in such a manner that it is sandwiched by the capstan 11 and pinch roller 12 and by the capstan 21 and pinch roller 22, this may be constituted in such a manner as shown in Fig. 2 that the wire-electrode 3 is wrapped around the capstan 11 and pinch roller 12 and then around the capstan 21 and pinch roller 22 (this wrapping order may be vice versa; namely, the wire-electrode 3 may be wrapped around the pinch roller 12 and capstan 11 and then around the pinch roller 22 and capstan 21) in order to prevent the wire-electrode 3 from slipping.

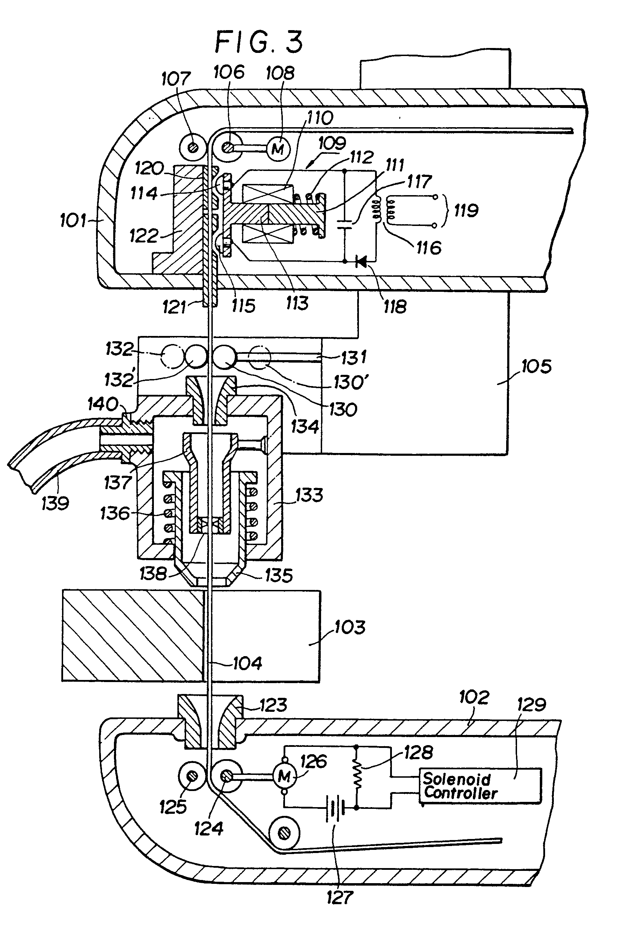

Next, the present invention will be described in detail with reference to Figs. 3 to 7.

Referring to Fig. 3, there is illustrated the state in that a wire-electrode cutting apparatus with a construction similar to the above-mentioned embodiment is installed in the electric discharge machine.

In Fig. 3, reference numerals 101 and 102 indicate upper and lower arms which are fixed or elevationally supported to a column of the electric discharge machine (not shown); 103 is a workpiece which is supported by a well-known supporting apparatus (not shown) and is sent for working; 104 a wire-electrode; 105 a work head elevationally supported to the arm 101; 106 a capstan for sending the wire-electrode; 107 a pinch roller for sending the wire-electrode; 108 a braking motor for driving the capstan 106; 109 denotes a solenoid consisting of a coil 110, an iron core 111, a spring 112, a contact holder 113, and contacts 114 and 115; 116 a power transformer; 117 a capacitor; 118 a diode; 119 power terminals; 120 and 121 are cooling tubes; 122 a cooling tube holder; 123 an electrode fetching guide; 124 a capstan for pulling the wire-electrode; 125 a pinch roller for pulling the wire-electrode; 126 a motor to drive the capstan 124; 127 a DC power supply to drive the motor 126; 128 a resistor interposed to detect an armature current of the motor 126; 129 a circuit for controlling the solenoid 109 (i.e. a solenoid controller); 130 a power supplying shoe for spark erosion; 131 an energizing shoe holder which is movably supported by the work head 105; 132 a pressure contact member which is detachably supported through the wire-electrode 104 to the power supplying shoe by the work head 105; 133 a nozzle casing fixed to the work head 105; 134 a guide for fetching the electrode; 135 a working fluid nozzle; 136 a spring; 137 a guide holder for supporting a die-type electrode guide 138; 139 a hose for introducing the working fluid from a working fluid supplying apparatus (not shown); and 140 a nozzle for fixing the hose.

Referring again to Fig. 3, there is shown the state in that the spark erosion has been finished. Although the work feeding of the workpiece 103, supply of the working fluid from the hose 139 and supply of working pulses from the power supplying shoe 130 are all stopped, the feeding of the wire-electrode by the capstans 124 and 106 is still continued. The coil 110 of the solenoid 109 is not energized, so that the contacts 114 and 115 are apart from the wire-electrode 104.

To cut the wire-electrode 104 in this state, the power supplying shoe 130 and its holder 131 are first rewardly moved to the location indicated by the alternate long and short claim line and a driving current of the braking motor 108 is reduced at a proper rate while rotating the motor 126, thereby reducing the speed of the motor 108.

In this case, the load of the motor 126 gradually increases and the tensile force to be applied to the wire-electrode 104 increases, and the driving current of the motor 126 also increases.

By preliminarily adjusting the relation between this tensile force and the motor driving current, when the driving current reached a constant value, it is possible to know that the tensile force has become a desired value.

When the driving current of the motor 126 reaches the constant value, the solenoid controller 129 energizes the coil 110 of the solenoid 109 to move the iron core 111 to the left in Fig. 3 for causing the contacts 114 and 115 to come into contact with the wire-electrode 104 through the contact holder 113, thereby applying the rapid braking to the braking motor 108 to stop it.

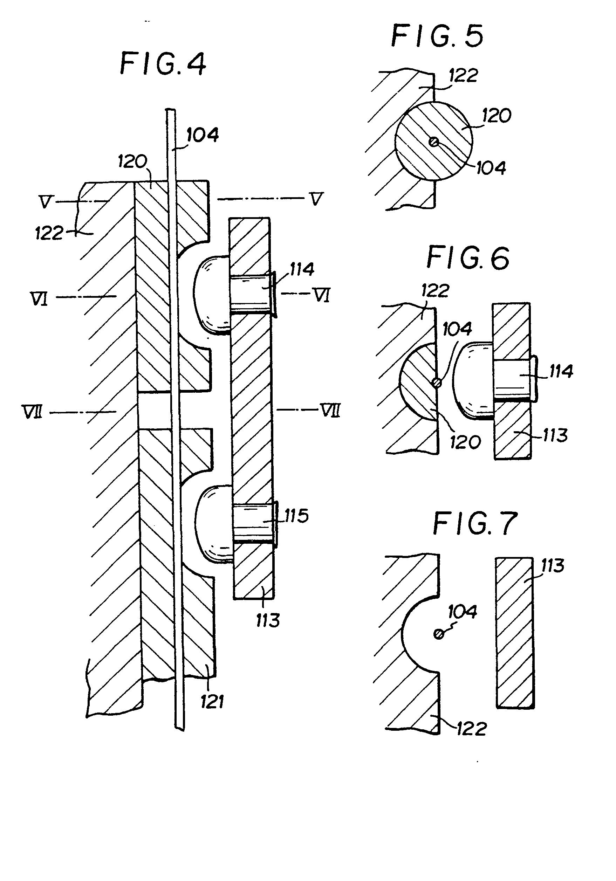

At this time, the changes in the capacitor 117 are discharged through the wire-electrode 104 between the contacts 114 and 115 and the wire-electrode 104 is heated. However, the wire-electrode 104 in the corresponding portion passes through the inside of the cold reserving tubes 120 and 121, and since the heat of that portion inside thereof is absorbed by the cooling tubes 120 and 121, an increase in temperature is suppressed. Thus, only the portion locating at the gap between both cooling tubes becomes high temperature, resulting in a reduction of the tensile strength and an increase in elongation percentage, so that the wire-electrode 104 is cut at this portion. The details of the cooling tubes 120 and 121 are illustrated in Figs. 4 to 7.

By performing the cutting operation in such a manner as described above without stopping the motor 126, the wire-electrode can be smoothly cut without being affected due to a rush current, shock, or the like of the motor 126.

After completion of the cutting, the wire-electrode 104 thus cut is wound by the capstan 124 and then the workpiece 103 of which the work has been finished is replaced by a new one.

At this time, the capstans 106 and 124 are again rotated and the free edge portion of the wire-electrode 104 remaining in the gap between the cooling tubes 120 and 121 passes through the inside of the cooling tubes 121 and drops. Thereafter, it sequentially passes through the electrode fetching guide 134 and die-type electrode guide 138, and if necessary, it passes through a small hole formed at the work starting point in the workpiece 103, then passes through the electrode fetching guide 123 and enters the lower arm 102. The wire-electrode 104 then enters the pass between the capstan 124 and the pinch roller 125 and is caught. Thereafter, it is introduced to a collecting apparatus (not shown) by a well-known pulling apparatus (not shown).

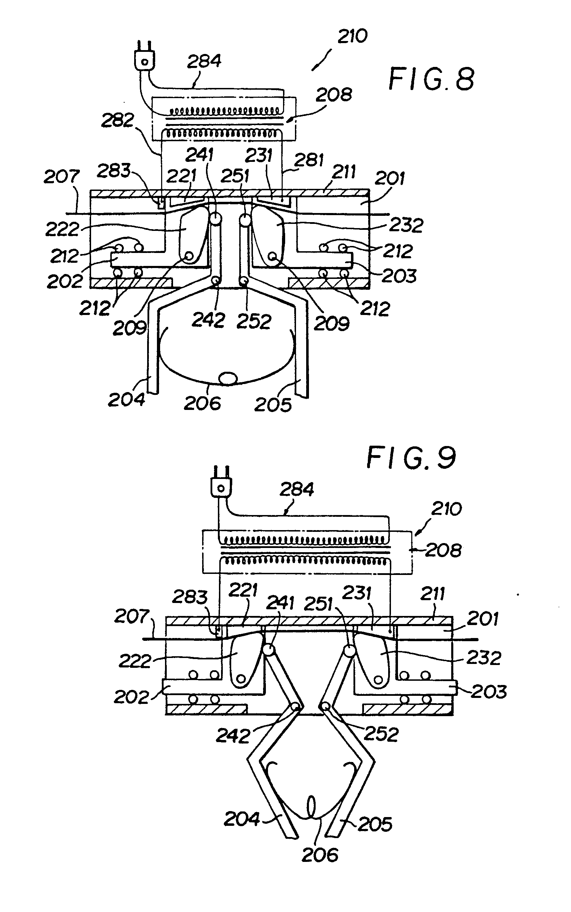

A wire-electrode cutting apparatuses shown in Figs. 8 and 9 will be described hereinbelow.

This embodiment is separately provided from the electrode feeding mechanism for spark erosion such as the above-mentioned capstan 106 or the like.

In Figs. 8 and 9, a reference numeral 210 represents a wire cutting apparatus. Its base 201 has a rectangular shape which is long in the moving direction of the wire-electrode and has a projection 211 at its peripheral edge portion on the longitudinal side, and its vertical cross section in the longitudinal direction is U-shaped, and is a member made of non-conductive material. A pair of L-character like moving members 202 and 203 consisting of non-conductive material are respectively slidably supported in the longitudinal direction in the concave portion of the base 201 by means of a plurality of guide rollers 212 and 212 attached to the base 201.

Although not shown herein, there are provided stoppers for preventing these moving members 202 and 203 from mutually approaching from the locations shown in Fig. 8 and springs adapted to press these moving members 202 and 203 toward the stoppers.

Wedge-shaped electrode members 221 and 231 each consisting of conductive material are fixedly adhered to each one end of the moving members 202 and 203. On one hand, swinging pressure members 222 and 232 are attached to the locations at which they face those electrode members and are detachable so that they are rotatable by pivotal axes 209 and 209.

A pair of bent levers 204 and 205 which respectively have rollers 241 and 251 at their points are attached between the moving members 202 and 203 so that they can be freely opened and closed by opening-closing fulcrum axes 242 and 252 mounted at the peripheral edge portion of the base 201. The rollers 241 and 251 are abut on the swinging pressure members 222 and 232, respectively.

A leaf spring 206 is interposed between the handles of the levers 204 and 205, so that the levers 204 and 205 are subject to the elastic force in the direction such that their handles are opened. In the state shown in Fig. 8, the levers are positioned at its maximum opening locations, namely at the moving end positions to be restricted by stoppers (not shown).

Although not shown similarly, springs are also interposed between the moving member 202 and the swinging pressure member 222 and between the moving member 203 and the swinging pressure member 232. These springs serve to act the elastic forces thereon in the direction so as to respectively detach the swinging pressure members 222 and 232 from the electrode members 221 and 231, thereby to come into contact with the rollers 241 and 251. Therefore, in the state shown in Fig. 8, microgaps through which a wire-electrode 207 can pass almost rectilinearly as a whole are formed between the moving members 202 and 203 and the swinging pressure members 222 and 232. Upon spark erosion, the wire-electrode 207 is inserted therein.

A limit switch 283 is attached to the swinging pressure member 222. This limit switch 283 is turned on when the swinging pressure member 222 moves for a constant microdistance from the position shown in Fig. 8 to the left in the drawing.

The electrode members 221 and 231 are connected through the limit switch 283 to the secondary side of a transformer 208. The primary side of the transformer 208 is connected through a cord 284 to a commercial power source.

When the wire-electrode is cut by the apparatus of this embodiment, the handles of the levers 204 and 205 are mutually made approach as shown in Fig. 9 against the elastic force of the spring 206 manually or by means of other suitable mechanical means. In this case, the head rollers 241 and 251 first press the swinging pressure members 222 and 232 to rotate them for a microangle, thereby strongly sandwiching the wire-electrode 207 existing between the electrode members 221 and 231. Then, the moving members 202 and 203 are pressed to the left and right to be opened. Thus, a constant tensile force is applied to the wire-electrode 207, and when the moving member 202 is further opened and moves for a constant distance, the limit switch 283 is turned on. Hence, the wire-electrode 207 between the electrode members 221 and 231 is supplied electric current and heated and, accordingly, is softened and elongated and is finally cut. The limit switch 283 is kept to on during the cutting operation.

A DC power source and a controlled pulse power source may be of course, substituted for the transformer 208 as a power source to heat the wire-electrode. It may be also possible to heat using an electric discharge circuit consisting of a capacitor to be charged by a direct current which is gotten by rectification of commercial electric power and a switching device which can control the discharge of said capacitor.

It may be needless to say that these heating power sources should be set or controlled so as not to cause fusion, vaporizing explosion, or the like due to overheating in dependence upon material, diameter, length, or the like of a wire-electrode.

Although the embodiment shown in Fig. 8 can be also used as an apparatus of the manually operating handy type, it may be also possible to use it attaching to fixed locations of a pair of arm holding column of the wire-cut electric discharge machine. In such a case, it can be constituted such that the cutting machine is placed to a proper location during the spark erosion and upon cutting operation of the wire-electrode, it is moved to a suitable cutting portion, thereby manually or automatically cutting the wire-electrode. Furthermore, the operations of the levers 204 and 205, or the like and the power control or the like can be also controlled by a sequential control apparatus or the like.

Various modifications are possible with respect to a tensile force. to be applied to the wire-electrode and a magnitude of a current flowing therethrough; however, for example, in case of a brass wire having a diameter of 0.2 mm, it is recommended to apply the tensile force of about 1.8—1.9 kg and heat the wire-electrode by passing a peak current of 30—150 A therethrough.

In this case, when a discharge energy of the capacitor is set to be extremely large, the wire-electrode might have been fused and cut from the portion that become thin or the like, or otherwise it may further explosively vaporized and fused. Such a situation is unpreferable since the cutting portion is melted and solidified like a droplet and a large burr occurs and an oxidized decomposed portion or the like can be also caused.

As a tension detecting mechanism, it is possible to adopt other various kinds of well-known mechanical, electrical, or electromechanical methods in place of the above-mentioned method of measuring a motor driving current for driving the capstans.

As for a method of supplying power to and heating the wire-electrode, it is possible to divisionally discharge a number of times from the capacitor by switching the switch a number of times or to repeat the charge and discharge a plurality of times. Furthermore, it is possible to construct such that the electrostatic capacity and/ or charging voltage of the capacitor can be switched over and selected. It may be also possible to turning on and off a pulse power source which enables easy control of a heating current, for example a DC voltage source by a switching device and to use by pulse-width modulating these on-off signals.

For the sending and pulling sections of the wire-electrode, it is possible to commonly utilize mechanisms which are ordinarily provided for a usual wire-cut electric discharge machine; however, it is possible to construct in such a manner that those sections are mounted individually from them and are usually placed to the locations so as not to be obstacles to the spark erosion and that only when the wire-electrode is cut, they are moved from the above-mentioned inoperative place to the cutting work positions, thereby performing the cutting operation.

The wire-electrode cutting apparatus according to the present invention is constructed as described above; therefore, this can be installed by slightly modifying the wire-cut electric discharge machine that has been already used.

Industrial availability

In the wire-electrode cutting apparatus according to the present invention, since constant quantities of power and heat are applied to the wire-electrode to be cut under a predetermined tensile force, as a conventional well-known cutter, the wire-electrode is cut in the most ideal conditions such that the shape and physical property of the cutting portion are constant and no burr exists, and that the end portion is linearly elongated and is appropriately hardened. Therefore, the wire-electrode can be extremely easily inserted through the guides and nozzles or the like of the electric discharge machine of through a small hole formed in a workpiece.

The wire-electrode cutting apparatus according to the present invention is particularly suitable to be installed to an electric discharge machine which is provided with an automatically wire inserting or threading apparatus.

## Claims

1. A wire-electrode cutting apparatus for a wire-cut electric discharge machine, comprising means (1, 2) for applying a predetermined tensile force to a portion to be cut of a wire-electrode (3) and current supply means (6, 7) for supplying electricity of a predetermined amount for heating said portion to be cut so that softening, elongating and cutting of the wire-electrode at the intermediate portion of the current supply means (6 and 7) can be carried out, characterized in that said wire-electrode cutting apparatus further comprises a tension sensing mechanism (9) capable of detecting a tensile force applied to the wire-electrode (3) when the wire-electrode is fixed or braked at the sending section (1) and pulled at the pulling section (2), said mechanism being adapted to send a control signal to the current supplying means (6, 7) for energizing and heating the electrode-wire (3) when the tensile force is raised up to a predetermined value, whereby the electrode (3) being soften, elongated and cut at the intermediate portion of the current supplying means (6, 7).

2. A wire-electrode cutting apparatus (210) for a wire-cut electric discharge machine, comprising means for applying a predetermined tensile force to a portion to be cut of a wire-electrode (207) and current supply means (208) for supplying electricity of a predetermined amount for heating said portion to be cut so that softening, elongating and cutting of the wire-electrode at the intermediate portion of the current supply means can be carried out, characterized in that said apparatus comprises:

a pair of electrode members (221, 231);

a pair of holding members (222, 232) which are arranged opposite to said electrode members so that the wire-electrode (207) can be gripped between the electrode members (221, 231) and the holding members (222, 232), said electrode members and said holding members being provided on a pair of moving members (202, 203) slidably arranged to each other; said means for applying a predetermined tensile force to a portion to be cut of the wire-electrode (207) comprising means for abutting said holding members (222, 232) to said electrode members (221, 231) to grip the wire-electrode there-between and for moving said holding members away from each other; and said wire-electrode (207) stretched by these members being electrically heated when a limit switch (283) arranged to be operated by the moving member (202, 203) is turned on.

3. A wire-electrode cutting apparatus according to any one of claims 1 or 2, wherein said means for supplying electricity (6, 7, 208) comprises a discharging circuit which includes a capacitor (83), a power source circuit for charging said capacitor to a predetermined voltage and switching means (8) and which allows the charges of said capacitor (83) to discharge through said switching means by passing through the portion to be cut of said wire-electrode (3, 207).

4. A wire-electrode cutting apparatus according to any one of claims 1 or 2, wherein said means for supplying electricity comprises a circuit which includes an AC power source and switching means and which connects said AC power source through said switching means with longitudinally spaced two points of said wire-electrode by sandwiching the portion to be cut of the wire-electrode.

5. A wire-electrode cutting apparatus according to any one of claims 1 or 2, wherein said means for supplying electricity comprises a circuit which includes a DC power source and switching means and which connects said DC power source through said switching means with longitudinally spaced two points of said wire-electrode by sandwiching the portion to be cut of the wire-electrode.

6. A wire-electrode cutting apparatus according to any one of claims 1 or 2, wherein said means for supplying electricity comprises a controlled pulse power source and control means therefor.

## Patentansprüche

1. Vorrichtung zum Zertrennen von Drahtelektroden für eine Funkenerosions-Drahtschneidemaschine, die Mittel (1, 2) zum Aufbringen einer vorgegebenen Zugkraft auf ein Stück einer zu zertrennenden Drahtelektrode (3) und Mittel zum Einspeisen eines Stromes (6, 7) zum Einspeisen einer vorgebbaren elektrischen Energie zum Aufheizen des zu zertrennenden Stückes umfaßt, so daß das zwischen den Mitteln zum Einspeisen (6, 7) befindliche Drahtstück weich gemacht, gestreckt und zertrennt werden kann, dadurch gekennzeichnet, daß die Vorrichtung zum Zertrennen der Drahtelektroden weiterhin einen Zugspannungs-Sensormechanismus (9) enthält, mit dem die Zugkraft erfaßt werden kann, welche an der Drahtelektrode (3) anliegt, wenn sie durch die Abrollvorrichtung (1) fixiert oder gebremst und durch die Zugvorrichtung (2) gezogen wird, daß der Zugspannungs-Sensormechanismus ein Kontrollsignal zum Einschalten und Aufheizen des Drahtes an die Mittel zum Einspeisen des Stromes (6, 7) sendet, wenn die Zugkraft einen vorbestimmten Wert erreicht, wodurch die Drahtelektrode (3) weicher gemacht, gestreckt und im Bereich zwischen den Mitteln zum Einspeisen des Stromes (6, 7) zertrennt wird.

2. Vorrichtung zum Zertrennen von Drahtelektroden (210) für eine Funkenerosions-Drahtschneidemaschine, die Mittel zum Aufbringen einer vorgegebenen Zugkraft auf ein Stück einer zu zertrennenden Drahtelektrode (207) und Mittel zum Einspeisen eines Stromes (208) zum Einspeisen einer vorgebbaren elektrischen Energie zum Aufheizen des zu zertrennenden Stückes umfaßt, so daß das zwischen den Mitteln zum Einspeisen befindliche Drahtstück weich gemacht, gestreckt und zertrennt werden kann, dadurch gekennzeichnet, daß die Vorrichtung zwei Elektrodenelemente (221, 231) und zwei Halteelemente (222, 232) umfaßt, die den Elektrodenelementen derart gegenüber angeordnet sind, daß die Drahtelektrode (207) zwischen den Elektrodenelementen (221, 231) und den Halteelementen (222, 232) eingespannt werden kann;

daß die Elektrodenelemente und die Halteelemente auf beweglichen Elementen (202, 203) angebracht sind, die gegeneinander verschiebbar sind;

daß die Mittel zum Übertragen einer voreingestellten Zugkraft auf ein Stück der zu zertrennenden Drahtelektrode (207) Mittel zum Andrücken der Halteelemente (222, 232) an die Elektrodenelemente (221, 231) zum Einspannen der Drahtelektrode dazwischen und zum Auseinanderbewegen der Halteelemente umfassen; und

daß die Drahtelektrode (207), die von diesen Elementen gespannt wird, elektrisch erhitzt wird, wenn ein Grenzwertschalter (283) eingeschaltet wird, der so angeordnet ist, daß ihn die beweglichen Elemente (202, 203) betätigen.

3. Vorrichtung zum Zertrennen von Drahtelektroden nach einem der Ansprüche 1 oder 2, dadurch gekennzeichnet, daß die Mittel zum Zuführen elektrischer Energie (6, 7, 208) einen Entladestromkreis enthalten, der einen Kondensator (83), eine Energiequelle zum Aufladen des Kondensators auf eine vorgegebene Spannung und Schaltmittel (8) umfaßt, und der es gestattet, den geladenen Kondensator (83) durch die Schaltmittel über das zu zertrennende Stück der Drahtelektrode (3, 207) zu entladen.

4. Vorrichtung zum Zertrennen von Drahtelektroden nach einem der Ansprüche 1 oder 2, dadurch gekennzeichnet, daß die Mittel zum Zuführen elektrischer Energie einen Schaltkreis enthalten, der eine Wechselspannungsquelle und Schaltmittel umfaßt, und der die Wechselspannungsquelle über die Schaltmittel an zwei in Längsrichtung beabstandeten Punkten der Drahtelektrode anschließt, in dem das zu zertrennende Stück der Drahtelektrode eingeklemmt wird.

5. Vorrichtung zum Zertrennen von Drahtelektroden nach einem der Ansprüche 1 oder 2, dadurch gekennzeichnet, daß die Mittel zum Zuführen elektrischer Energie einen Schaltkreis enthalten, der eine Gleichspannungsquelle und Schaltmittel umfaßt, und der die Gleichspannungsquelle über die Schaltmittel an zwei in Längsrichtung beabstandeten Punkten der Drahtelektrode anschließt, in dem das zu zertrennende Stück der Drahtelektrode eingeklemmt wird.

6. Vorrichtung zum Zertrennen von Drahtelektroden nach einem der Ansprüche 1 oder 2, dadurch gekennzeichnet, daß die Mittel zum Zuführen elektrischer Energie ein Schaltnetzteil und Steuermittel dafür enthalten.

**Revendications**

1. Appareil de coupe d'électrode à fil pour une machine à électro-érosion à fil, comportant des moyens (1, 2) pour appliquer une force de traction prédéterminée sur une partie à couper d'une électrode à fil (3) et des moyens d'alimentation en courant (6, 7) pour fournir de l'électricité suivant une quantité prédéterminée afin de chauffer la dite partie à couper de telle sorte que le ramollissement l'allongement et la coupe de l'électrode à fil peuvent être réalisés au milieu des moyens d'alimentation en courant (6, 7), caractérisé en ce que le dit appareil de coupe d'électrode à fil comporte en outre un mécanisme de détection de tension (9) capable de détecter la force de traction appliquée sur l'électrode à fil (3) lorsque l'électrode à fil est fixée ou freinée à la section de départ (1) et tirée à la section de traction (2), le dit mécanisme étant adapté pour envoyer un signal de commande aux moyens d'alimentation en courant (6, 7) pour exciter et chauffer l'électrode à fil (3) lorsque la force de traction est élevée jusqu'à une valeur prédéterminée, l'électrode (3) étant ainsi ramollie, allongée et coupée au milieu des moyens d'alimentation en courant (6, 7).

2. Appareil de coupe d'électrode à fil (210) pour une machine à électro-érosion à fil, comportant des moyens pour appliquer une force de traction prédéterminée sur une partie à couper d'une électrode à fil (207) et des moyens d'alimentation en courant (208) pour fournir de l'électricité suivant une quantité prédéterminée afin de chauffer la dite partie à couper de telle sorte que le ramollissement, l'allongement et la coupe de l'électrode à fil peuvent être réalisés au milieu des moyens d'alimentation en courant, caractérisé en ce que le dit appareil comportant en outre:

une paire d'éléments d'électrode (221, 231);

une paire d'éléments de maintien (222, 232) qui sont disposés à l'opposé des dits éléments d'électrode de telle sorte que l'électrode à fil (207) peut être saisie entre les éléments d'électrode (221, 231) et les éléments de maintien (222, 232), les dits éléments d'électrode et les dits éléments de maintien étant pourvus d'une paire d'éléments mobiles (202, 203) disposés de façon coulissante l'un par rapport à l'autre; les dits moyens pour appliquer une force de traction prédéterminée à une partie à couper de l'électrode à fil (207) comportant des moyens pour mettre en butée les dits éléments de maintien (222, 232) contre les dits éléments d'électrode (221, 231) de façon à saisir l'électrode à fil entre eux et pour déplacer les dits éléments de maintien à l'écart l'un de l'autre; et la dite électrode à fil (207) étirée par ces éléments étant chauffée électriquement lorsqu'un contacteur de fin de course (283) prévu pour être actionné par l'élément mobile (202, 203) est enfoncé.

3. Appareil de coupe d'électrode à fil selon l'une des revendications 1 ou 2, dans lequel les dits moyens d'alimentation en électricité (6, 7, 208) comportent un circuit de décharge qui comprend un condensateur (83), un circuit d'alimentation en puissance pour charger le dit condensateur à une tension prédéterminée et des moyens de commutation (8) et qui permettent de décharger les charges du dit condensateur (83) à l'aide des dits moyens de commutation en passant par la partie à couper de la dite électrode à fil (3, 207).

4. Appareil de coupe d'électrode à fil selon l'une des revendications 1 ou 2, dans lequel les dits moyens d'alimentation en électricité comportent un circuit qui comprend une source de puissance alternative et des moyens de commutation et qui relie la dite source de puissance alernative par l'intermédiaire des dits moyens de commutation à deux points longitudinalement espacés de la dite électrode à fil en serrant la partie à couper de l'électrode à fil.

5. Appareil de coupe d'électrode à fil selon l'une des revendications 1 ou 2, dans lequel les dits moyens d'alimentation en électricité comportent un circuit qui comprend une source de puissance continue et des moyens de commutation et qui relie la dite source de puissance continue par l'intermédiaire des dits moyens de commutation à deux points longitudinalement espacés de la dite électrode à fil en serrant la partie à couper de l'électrode à fil.

6. Appareil de coupe d'électrode à fil selon l'une des revendications 1 ou 2, dans lequel les dits moyens d'alimentation en électricité comportent une source de puissance impulsionnelle commandée et des moyens de commande à cet effet.

FIG.1

FIG.2

FIG. 3

EP 0 107 737 B1

FIG. 4

FIG. 5

FIG. 6

FIG. 7

3

FIG. 8

FIG. 9